# NEUE EUROPÄISCHE PATENTSCHRIFT

(11) **EP 3 947 067 B2**
(45) Veröffentlichungstag und Bekanntmachung des Hinweises auf die Entscheidung über den Einspruch: **09.12.2026**
(45) Hinweis auf die Patenterteilung: 10.04.2024
(21) Anmeldenummer: 20710823.4
(22) Anmeldetag: 28.02.2020
(51) Int. Cl.: B60T 8/17, B60T 13/66, B60T 17/22

(54) **BREMSREGELEINRICHTUNG, BREMSVERFAHREN UND BREMSSYSTEM FÜR EIN SCHIENENFAHRZEUG**
BRAKE REGULATING DEVICE, BRAKING METHOD, AND BRAKE SYSTEM FOR A RAIL VEHICLE
DISPOSITIF DE RÉGLAGE DE FREIN, PROCÉDÉ DE FREINAGE ET SYSTÈME DE FREIN POUR UN VÉHICULE FERROVIAIRE

(30) Priorität: 01.04.2019 DE 102019108447
(43) Veröffentlichungstag der Anmeldung: 09.02.2022
(73) Patentinhaber: KNORR-BREMSE Systeme für Schienenfahrzeuge GmbH, 80809 München (DE)
(72) Erfinder: FRIESEN, Ulf, 85579 Neubiberg (DE); ELSTORPFF, Marc-Gregory, 80368 München (DE); LANG, Rupert, 92287 Schmidmühlen (DE); FURTWÄNGLER, Ralf, 81379 München (DE)
(74) Vertreter: Kleine, Hubertus
(86) Internationale Anmeldenummer: PCT/EP2020/055318
(87) Internationale Veröffentlichungsnummer: WO 2020/200598

(56) Entgegenhaltungen:
- WO-A1-03/086809
- WO-A1-03/086809
- DE-A1- 102010 053 683
- DE-A1- 102010 053 683
- DE-A1- 102015 110 053
- "Bahnanwendungen - Bremsen - Anforderungen an die Bremsausrüstung lokbespannter Züge; Deutsche Fassung EN 14198:2016", DIN EN 14198; ERSATZ FUR DIN EN 14198:2005-03, vol. 53, no. 22, 1 March 2017 (2017-03-01), pages 9311 - 9324, XP093253541, DOI: 10.1021/ie403692h

## Beschreibung

Die Erfindung betrifft eine Bremsregeleinrichtung für ein Schienenfahrzeug, die einen Eingang für einen Verzögerungssollwert und einen Eingang für einen Verzögerungsistwert sowie einen Ausgang für einen Verzögerungs-Stellgrößenwert aufweist. Bei der Bremsregeleinrichtung wird der Stellgrößenwert durch eine Regeleinheit eingestellt, um eine Abweichung zwischen dem Verzögerungsistwert und dem Verzögerungssollwert zu minimieren, wobei eine Begrenzungsvorrichtung für den Verzögerungs-Stellgrößenwert vorhanden ist. Die Erfindung betrifft weiterhin ein Bremssystem für ein Schienenfahrzeug mit einer derartigen Bremsregeleinrichtung sowie ein Betriebsverfahren für ein Bremssystem.

Bremssysteme für Schienenfahrzeuge weisen neben generatorischen Bremsen und unterstützenden Bremsen, wie beispielsweise Wirbelstrombremsen, Reibungsbremsen auf, beispielsweise Scheiben- oder Klotzbremsen. Umwelteinflüsse wie insbesondere Nässe, Schnee oder Eis vermindern einen Reibwert der Reibungspartner dieser Bremsen, also beispielsweise den Reibwert zwischen Bremsbelag und Bremsscheibe. Um trotz variabler Reibwerte ein vorhersehbares Bremsergebnis zu erzielen, werden Regelkreise eingesetzt, die eine angeforderte und erwartete Verzögerung des Schienenfahrzeugs mit einer tatsächlich erreichten Verzögerung vergleichen und eine Stellgröße des Bremssystems, beispielsweise eine Bremskraft, nachregeln.

Die Druckschrift WO 03/086809 A1 zeigt ein Verfahren zum elektrodynamischen Bremsen eines Schienenfahrzeugs, bei dem eine Beschleunigung des Schienenfahrzeugs in Abhängigkeit seiner Geschwindigkeit geregelt wird, um eine elektrodynamische Abbremsung bis zum Stillstand sicher und ruckfrei zu ermöglichen. Dabei können vom Fahrer Grenzen für das Drehmoment eines Antriebs, der zur Bremsung eingesetzt wird, vorgegeben werden.

Ein Bremssystem mit einer Regeleinrichtung ist beispielsweise auch aus der Druckschrift DE 10 2015 110 053 A1 bekannt. Bei diesem System werden Beschleunigungskomponenten des Schienenfahrzeugs ermittelt, wobei als Besonderheit neben einer Längsverzögerung auch eine vertikal wirkende Verzögerung ermittelt wird, um eine Wirkung einer Hangabtriebskraft separat berücksichtigen zu können. Die Druckschrift DE 10 2011 052 545 B4 beschreibt ebenfalls ein Bremssystem mit einer Bremsregeleinrichtung, bei dem Verzögerungsistwerte redundant gemessen und gemittelt werden, um eine erhöhte Sicherheit für die korrekte Funktion des Bremssystems zu erzielen.

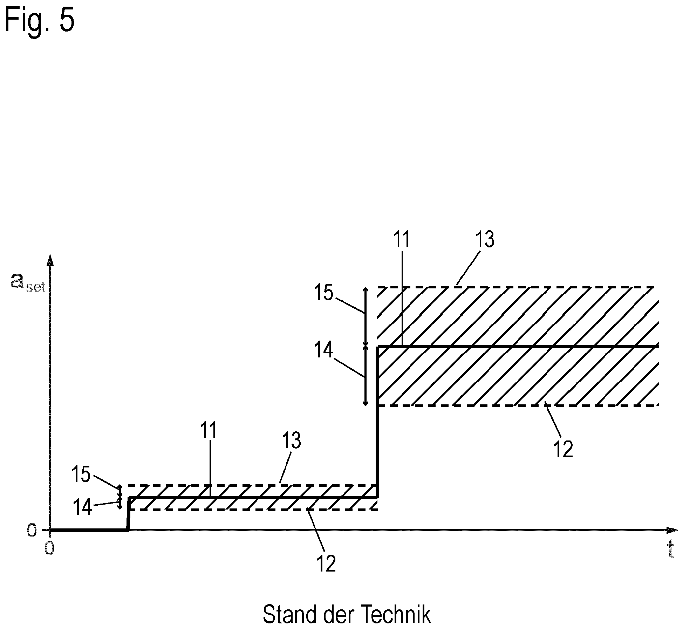

Figur 5 zeigt das Verhalten einer Regelstrecke eines Regelkreises für ein solches geregeltes Bremssystem gemäß dem Stand der Technik.

Im Diagramm ist auf der horizontalen Achse eine fortschreitende Zeit t wiedergegeben und auf der vertikalen Achse ein vorgegebener Sollwert, hier ein vorgegebener Beschleunigungssollwert aₛₑₜ. In einer Kurve 11 ist eine Anforderung an das Bremssystem bezüglich der einzunehmenden Verzögerung aₛₑₜ zeitabhängig wiedergegeben. Die Kurve 11 steigt in zwei Schritten von einem Anfangswert aₛₑₜ= 0 über einen Zwischenwert auf einen angeforderten Maximalwert der zu erreichenden Verzögerung. Es wird also eine Bremssituation wiedergegeben, in der für eine gewisse Zeit eine leichte, danach eine stärkere Bremsung durchgeführt werden soll.

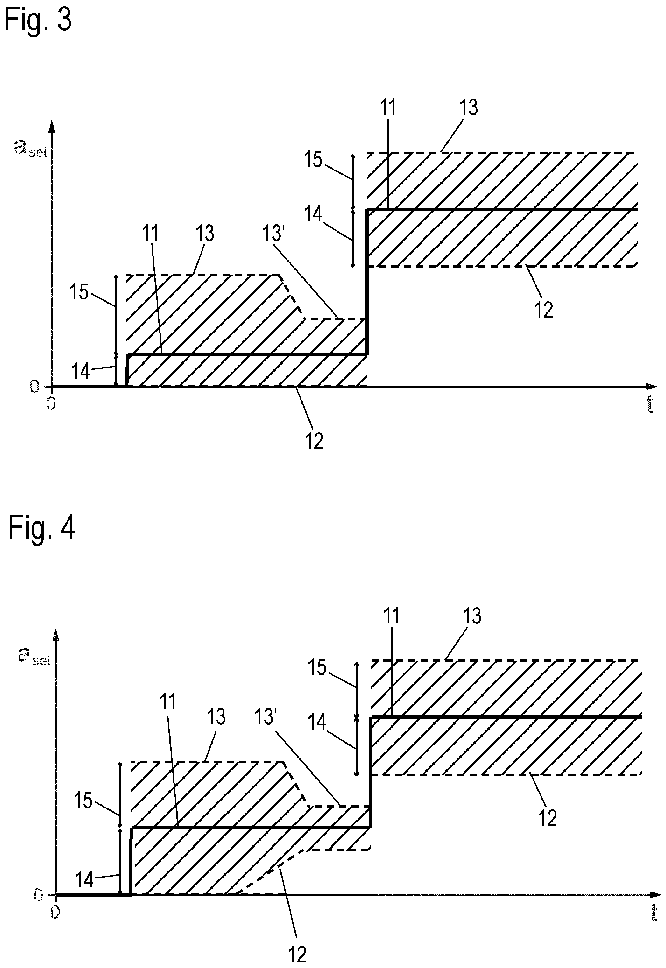

Um die Kurve 11 herum sind eine untere Regelgrenze 12 und eine obere Regelgrenze 13 eingezeichnet. Diese beiden Grenzen 12, 13 geben einen Regelbereich an, innerhalb dessen eine Bremsregeleinrichtung nach dem Stand der Technik die angeforderte Verzögerung modifizieren kann, um mit einer tatsächlich gemessenen Verzögerung möglichst nah an die angeforderte Verzögerung gemäß der Kurve 11 heranzukommen. Die dargestellte Situation ergibt sich aus dem Regelverhalten einer Regeleinheit des Regelkreises, die hier beispielhaft als ein Proportionalregler aufgebaut ist. Den Regelgrenzen 12, 13 entspricht ein maximaler positiver Regelhub 14 bzw. ein maximaler negativer Regelhub 15, die in der Figur 4 durch Pfeile dargestellt sind. Gemäß dem Stand der Technik ergibt sich für den genannten Proportionalregler, dass der maximale positive Regelhub 14 und der maximale negative Regelhub 15 für einen angeforderten Verzögerungswert gleich hoch sind und einem bestimmten vorgegebenen Prozentsatz des aktuell angeforderten Verzögerungswerts entsprechen.

In der Realität treten jedoch insbesondere bei den eingangs genannten Umweltbedingungen wie Nässe, Schnee oder Eis zwischen den Reibpartnern Effekte auf, die durch den beschrieben Regelkreis nur unzureichend kompensiert werden können. Beispielsweise wirken sich die genannten Umwelteinflüsse bei geringeren Bremsanforderungen stärker aus als bei höheren Bremsanforderungen. Ein Grund ist beispielsweise, dass während einer stärkeren Bremsung durch die Erwärmung der Reibungspartner (Energieeintrag) Feuchtigkeit verdunstet und der beeinträchtigende Effekt sich während der Bremsung verringert (Effekt des "Trockenbremsens").

Es ist eine Aufgabe der vorliegenden Erfindung, eine Bremsregeleinrichtung, ein Bremssystem und ein Betriebsverfahren für ein Bremssystem zu schaffen, die auch bei veränderten Reibeigenschaften zwischen den Reibungspartnern des Bremssystems, insbesondere bedingt durch Nässe, Schnee oder Eis, zu optimalen Bremsergebnissen führen.

Diese Aufgabe wird durch eine Bremsregeleinrichtung, ein Bremssystem bzw. ein Betriebsverfahren für ein Bremssystem mit den jeweiligen Merkmalen der unabhängigen Ansprüche gelöst. Vorteilhafte Ausgestaltung und Weiterbildung sind in den abhängigen Ansprüchen wiedergegeben.

Eine erfindungsgemäße Bremsregeleinrichtung der eingangs genannten Art zeichnet sich dadurch aus, dass unabhängig von der Regeleinheit eine Begrenzungsvorrichtung vorhanden ist, die den Verzögerungs-Stellgrößenwert derart begrenzt, dass der Verzögerungs-Stellgrößenwert von dem Verzögerungssollwert höchstens um einen maximalen negativen Regelhub zu kleineren Werten oder höchstens um einen maximalen positiven Regelhub zu größeren Werten abweicht.

Die erfindungsgemäße Begrenzungseinrichtung ermöglicht es, unabhängig vom gewählten Regelverhalten der Regeleinheit den maximalen positiven bzw. negativen Regelhub zu kontrollieren. Auf diese Weise können gleichzeitig optimale Regelparameter gewählt werden und es kann sichergestellt werden, dass kein zu großer Regelhub auftritt. Insbesondere bei schwierigen Bedingungen wie Nässe und/oder Schnee können so optimale Bremsergebnisse erzielt werden.

Bei einem Einsatz eines Bremsregelkreises mit einem Proportionalregler ergibt sich gemäß dem Stand der Technik prinzipbedingt auch eine Regelcharakteristik, bei der die maximalen Regelhübe begrenzt sind. Dieses Verhalten ist aber auf einen Einsatz eines reinen Proportionalreglers beschränkt, der ein nur unzureichendes Regelverhalten zeigt. Zudem ist eine so gesetzte inhärente Begrenzung des Regelhubs unflexibel, da der maximale Hub in positiver wie negativer Richtung proportional zum Verzögerungssollwert ist. Dieses Verhalten führt jedoch gerade bei Nässe und/oder Schnee nicht zu optimalen Bremsergebnissen. In einer vorteilhaften Ausgestaltung der Bremsregeleinrichtung ist daher zumindest einer der beiden maximalen Regelhübe nicht proportional zum Verzögerungssollwert gewählt.

In einer weiteren vorteilhaften Ausgestaltung der Bremsregeleinrichtung ist die Summe aus dem maximalen negativen Regelhub und dem maximalen positiven Regelhub ein vorgegebener fester Wert. Der maximale negative Regelhub kann dabei ungleich dem maximalen positiven Regelhub gewählt sein. Auf diese Weise werden insbesondere bei kleineren Verzögerungssollwerten, also bei geringeren Bremsanforderungen, höhere Bremskräfte ermöglicht, die einen höheren Energieeintrag bewirken, durch die eine nässebedingt verringerte Bremswirkung ausgeglichen werden kann und das Bremssystem konditioniert werden kann.

Erfindungsgemäß sind der positive und/oder der negative maximale Regelhub zeitabhängig, insbesondere derart, dass nach einer vorgegebenen Bremszeit abgesenkt wird. So kann ein maximaler Energieeintrag in die Bremse begrenzt werden und z.B. dem Effekt des "Trockenbremsens" der Bremse Rechnung getragen werden. Dabei kann vorgesehen sein, dass der maximale positive Regelhub nur dann zeitabhängig ausgestaltet wird, wenn der Verzögerungssollwert unterhalb eines vorgegebenen Grenzwerts liegt. Analog kann vorgesehen sein, dass der maximale negative Regelhub nur dann zeitabhängig ausgestaltet wird, wenn der Verzögerungssollwert oberhalb eines weiteren vorgegebenen Grenzwerts liegt.

In einer weiteren vorteilhaften Ausgestaltung der Bremsregeleinrichtung ist zumindest einer der beiden maximalen Regelhübe durch eine von dem Verzögerungssollwert und/oder der Bremszeit abhängigen Kennlinie oder einem Kennlinienfeld vorgegeben. Weiter kann zumindest einer der beiden maximalen Regelhübe abhängig von externen Einflussgrößen sein. Externe Einflussgrößen können (gemessene oder anderweitig ermittelte) Umgebungsbedingungen wie Temperatur oder Feuchtigkeit sein oder auch Fahrbedingungen des Schienenfahrzeugs, insbesondere eine Fahrgeschwindigkeit, ein Bremsdruck, eine Bremskraft und/oder eine Aktivierung eines Gleitschutzsystems.

In einer weiteren vorteilhaften Ausgestaltung der Bremsregeleinrichtung ist die Begrenzungsvorrichtung mit der Regeleinheit gekoppelt, um auf Parameter der Regeleinheit abhängig von einer Begrenzung einzuwirken. Auf diese Weise kann eine höhere Stabilität des Regelkreises beim Ansprechen der Begrenzungsvorrichtung erreicht werden. Wenn die Regeleinheit z.B. einen integralen Regelanteil aufweist, so würde ein integrierter Wert der Differenz zwischen dem Verzögerungsistwert und dem Verzögerungssollwert kontinierlich weiter ansteigen (oder abfallen), während die Begrenzungsvorrichtung den ausgegebenen Verzögerungs-Stellgrößenwert bereits begrenzt. Bei einer anschließenden geänderten Bremssituation, in der der Verzögerungs-Stellgrößenwert nicht begrenzt wird, würde durch den integralen Regelanteil ein zu großer (oder zu kleiner) Stellgrößenwert ausgegeben.

Ein erfindungsgemäßes Bremssystem für ein Schienenfahrzeug zeichnet sich durch eine derartige Bremsregeleinrichtung aus. Es ergeben sich die im Zusammenhang mit der Bremsregeleinrichtung beschriebenen Vorteile.

Bei einem erfindungsgemäßen Betriebsverfahren für ein Bremssystems eines Schienenfahrzeugs wird ein Verzögerungs-Stellgrößenwert abhängig von einem Verzögerungssollwert und einem Verzögerungsistwert durch eine Regeleinheit eingestellt, um eine Abweichung zwischen dem Verzögerungsistwert und dem Verzögerungssollwert zu minimieren. Das Verfahren zeichnet sich dadurch aus, dass der Verzögerungs-Stellgrößenwert derart begrenzt wird, dass der Verzögerungs-Stellgrößenwert von dem Verzögerungssollwert höchstens um einen maximalen negativen Regelhub zu kleineren Werten oder höchstens um einen maximalen positiven Regelhub zu größeren Werten abweichen kann, wobei zumindest einer der beiden maximalen Regelhübe abhängig von der Bremszeit bestimmt wird. Bevorzugt ist dabei zumindest einer der beiden maximalen Regelhübe nicht proportional zum Verzögerungssollwert. Weiter bevorzugt ist zumindest einer der beiden maximalen Regelhübe abhängig von dem Verzögerungssollwert und/oder Umgebungsbedingungen und/oder Fahrbedingungen bestimmt wird.

Die Erfindung wird nachfolgend anhand von Ausführungsbeispielen mit Hilfe von Figuren näher erläutert. Die Figuren zeigen:
- Figur 1: ein Blockschaltbild einer Regelstrecke eines Bremssystems;
- Figuren 2-4: jeweils ein Diagramm zur Darstellung des Verhaltens einer Regelstrecke eines anmeldungsgemäßen Bremssystems; und
- Figur 5: ein Diagramm zur Darstellung des Verhaltens eines Bremssystems gemäß dem Stand der Technik.

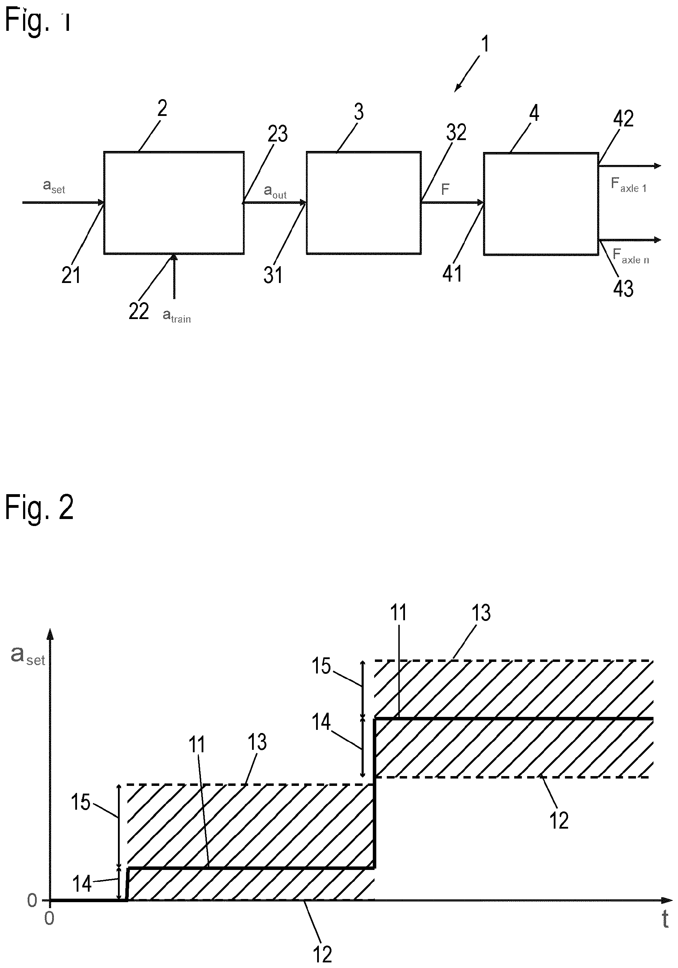

In Figur 1 ist eine Regelstrecke 1 eines anmeldungsgemäßen Bremssystems in Form eines Blockschaltbilds dargestellt. Die Regelstrecke 1 umfasst eine Bremsregeleinrichtung 2, der über einen Eingang 21 ein Verzögerungssollwert aₛₑₜ vorgegeben wird. Der Verzögerungssollwert aₛₑₜ wird beispielsweise von einem übergeordneten Bremssteuersystem aus einem Stand des Schienenfahrzeugs vorgegeben. Die Bremsregeleinrichtung 2 weist einen zweiten Eingang 22 auf, dem ein tatsächlich gemessener Verzögerungsistwert aₜᵣₐᵢₙ zugeführt wird. Der gemessene Verzögerungsistwert aₜᵣₐᵢₙ kann beispielsweise über Beschleunigungssensoren und/oder über ein GPS (Global Positioning System) bereitgestellt werden.

Die Bremsregeleinrichtung 2 weist ferner einen Ausgang 23 auf, an dem ein modifizierter Verzögerungswert als Verzögerungs-Stellgröße aₒᵤₜ ausgegeben wird. Die genaue Funktion der Bremsregeleinrichtung 2 wird nachfolgend in Zusammenhang mit den Figuren 2 und 3 näher erläutert.

Die von der Bremsregeleinrichtung 2 ausgegebene Verzögerungs-Stellgröße aₒᵤₜ wird einem Eingang 31 eines Stellgrößenumsetzers 3 zugeführt. Der Stellgrößenumsetzer 3 ermittelt aus der Verzögerungs-Stellgröße aₒᵤₜ eine Bremskraft F, die an einem Ausgang 32 ausgegeben wird. Die Bremskraft F ist die Stellgröße für die weiteren Komponenten des Bremssystems. Sie gibt eine durch die Bremsen des Bremssystems kumuliert zu erzielende Kraft an und wird aus der Verzögerungs-Stellgröße aₒᵤₜ u.a. unter Berücksichtigung der Masse des Schienenfahrzeugs ermittelt. Der Wert für die Bremskraft F wird über einen Eingang 41 einem Verteiler 4 übermittelt, der die Bremskraft auf verschiedene Achsen und/oder verschiedene Bremsen und/oder verschiedene Bremstypen des Schienenfahrzeugs aufteilt und an entsprechenden Ausgängen, hier beispielhaft zwei Ausgängen 42, 43, für verschiedene Achsen des Schienenfahrzeugs Achsbremskräfte F_{axle 1} und F_{axle n} ausgibt.

Ohne die anmeldungsgemäße Bremsregeleinrichtung 2 könnte die vorgegebene und zu erreichende Verzögerung aₛₑₜ unmittelbar auf den Eingang 31 des Stellgrößenumsetzers 3 geleitet werden. Dieser würde unter Berücksichtigung der Masse des Schienenfahrzeugs die Bremskraft F gesteuert ausgeben. Im dargestellten Fall wird die Bremskraft F dadurch modifiziert, dass anstelle der vorgegebenen zu erreichenden Verzögerung aₛₑₜ der modifizierte Wert der Verzögerungs-Stellgröße aₒᵤₜ dem Stellgrößenumsetzer 3 zugeführt wird, der entsprechend einen modifizierten Wert für die Bremskraft F ausgibt. In einer alternativen Ausgestaltung des anmeldungsgemäßen Bremssystems könnte eine Regelung auch auf Basis der Bremskraft F erfolgen, in dem die Bremskraft F anstelle der Verzögerung von einer entsprechenden Bremsregeleinrichtung modifiziert wird. Das vorgestellte System ist jedoch dahingehend vorteilhaft, dass beim Einwirken der Regelung auf den Verzögerungssollwert eine Umrechnung unter Berücksichtigung der Fahrzeugmasse nur einmal erfolgen muss und nicht für einen vorgesteuerten und einen Regelanteil separat.

Figur 2 zeigt in gleicher Weise wie die eingangs beschriebene Figur 5 die Eigenschaften einer Regelstrecke eines nicht erfindungsgemäßen Bremssystems in einem Beispiel. Es ist in der Kurve 11 die gleiche Bremssituation wie in Figur 4 wiedergegeben, bei der eine angeforderte Verzögerung aₛₑₜ vom Wert 0 in zwei Stufen ansteigend eingestellt wird. Wiederum sind eine untere und eine obere Regelgrenze 12, 13 sowie der damit jeweils korrespondierende maximale negative Regelhub 14 und der maximale positive Regelhub 15 eingezeichnet.

Beim Einstellen der höheren Sollwertvorgabe für die Verzögerung aₛₑₜ zeigt sich das aus dem Stand der Technik bekannte Verhalten, bei dem der maximale positive und der maximale negative Regelhub 14, 15 gleich groß sind. Für den im rechten Teil der Figur 2 dargestellten maximalen Verzögerungswert, der angefordert werden kann, kann der Regelhub 14, 15 auch ebenso groß gewählt sein, wie es beim Bremssystem gemäß dem Stand der Technik ist.

Bei kleinerem vorgegebenem Verzögerungssollwert aₛₑₜ (linker Teil des Diagramms) ist der Abstand zwischen unterer und oberer Regelgrenze 12, 13 jedoch ebenso groß wie bei dem angeforderten Maximalwert der Verzögerung aₛₑₜ im rechten Teil der Figur. Die Breite des Regelbereichs ist somit unabhängig von der Sollwertvorgabe, ist also über den gesamten Vorgabebereich konstant. Wie Figur 2 ebenfalls zeigt, erfolgt die Aufteilung des Regelbereichs in den maximalen positiven Regelhub 15 und den maximal negativen Regelhub 14 jedoch bei kleinerem Vorgabewert derart, dass ein größerer maximaler positiver Regelhub 15 vorliegt. Der Regelbereich liegt somit nicht mittig um die Kurve 11 bei kleineren Sollwertvorgaben. Dieses Regelverhalten trägt dem Umstand Rechnung, dass gerade bei beginnendem Bremsvorgang mit kleinerem Verzögerungswert Feuchtigkeit sich negativ bemerkbar macht, die durch den größeren maximalen positiven Regelhub 15 ausgeglichen werden kann.

Durch die Trennung von Regeleinheit und Begrenzungsvorrichtung können die Art der Regelung (z.B. Proportional- und/oder Differenzial- und/oder Integralregelung) und die verwendeten Regelparameter ganz unabhängig von den Regelgrenzen, d.h. den maximalen positiven bzw. negativen Regelhüben 14, 15 gewählt werden.

Figur 3 zeigt ein Ausführungsbeispiel für das Verhalten einer Regelstrecke eines anmeldungsgemäßen Bremssystems. Die Darstellung und Bremssituation entsprechen wiederum den in Figur 2 bzw. 5 gezeigten.

Bei diesem Beispiel werden die Regelgrenzen bei geringeren Bremsanforderungen (aₛₑₜ klein) wie in Beispiel der Figur 2 absolut und asymmetrisch gehalten. Dieses erfolgt jedoch nur zeitlich begrenzt, wobei ab einer gewissen fest definierten bzw. auch dynamisch während des Bremsvorgangs berechneten Zeit von den in Figur 2 gezeigten Regelgrenzen 12, 13 in einem Übergangsbereich auf die in Figur 4 gezeigten Regelgrenzen 12, 13 gewechselt wird. Insbesondere wird der anfangs größere maximale positive Regelhub 15 auf den kleineren Wert des maximalen negativen Regelhubs zurückgenommen. Dieses ermöglicht zunächst ein vorteilhaftes Bremsverhalten, um Nässe oder vergleichbare Umwelteinflüsse auszuschalten, gewährleistet dann jedoch bei länger anhaltender Bremsung eine Begrenzung des Energieeintrags, der ansonsten bei übermäßiger Bremsung erfolgen würde.

Ein solches zeitabhängiges Verhalten des maximalen positiven Regelhubs 15 kann ebenso bei dem maximalen negativen Regelhub 14 umgesetzt sein. Dieses ist im Beispiel der Figur 4 gezeigt, bei dem beide Regelhübe 14, 15 eine Zeitabhängigkeit aufweisen. Die Zeitabhängigkeit selbst kann dabei, wie auch in der Figur 4 gezeigt ist, für die beiden Reglhübe 14, 15 unterschiedlich sein. Auch kann die Form der Zeitabhängigkeit anders als die hier beispielhaft gezeigte lineare Zeitabhängigkeit sein.

Die Figuren 2 bis 4 zeigen dabei lediglich Ausführungsbeispiele von Regelgrenzen bzw. Regelhüben, die sich nicht strikt relativ zum vorgegebenen Verzögerungssollwert ergeben, sondern in anderem Funktionszusammenhang zum vorgegebenen Verzögerungssollwert stehen und/oder zeitabhängig sind.

Es versteht sich, dass ein beliebiger Funktionszusammenhang zum vorgegebenen Verzögerungssollwert eingesetzt werden kann. Der Funktionszusammenhang ist dabei vorzugsweise so optimiert, dass bei jeder gewünschten Verzögerung bei nicht ausreichender Bremswirkung ein möglichst guter Konditionierungseffekt der Reibungspartner, zum Beispiel eine Abtrocknung der vorhandenen Feuchtigkeit, erzielt wird.

Der Funktionszusammenhang bzw. eine sich daraus ergebende Kennlinie kann zusätzlich auch abhängig von anderen Einflussgrößen gemacht werden, beispielsweise von Umgebungsbedingungen wie Temperatur und/oder Feuchtigkeit, und/oder von Fahrbedingungen wie Fahrzeuggeschwindigkeit, Raddrehzahl, Bremsdrücken bzw. Bremskräften und/oder Aktivitäten eines Gleitschutzsystems.Dabei ist, wie in den Figuren 3 und 4 gezeigt, eine zeitliche Funktionsabhängigkeit eingebracht, um zum Beispiel den maximalen Energieeintrag zu begrenzen.

### BEZUGSZEICHEN

- 1: Regelstrecke
- 11: Anforderungskurve
- 12, 13: Regelgrenze
- 14: maximaler negativer Regelhub
- 15: maximaler positiver Regelhub
- 2: Bremsregeleinrichtung
- 21, 22: Eingang
- 23: Ausgang
- 3: Stellgrößenumsetzer
- 31: Eingang
- 32: Ausgang
- 4: Verteiler
- 41: Eingang
- 42, 43: Ausgang

- aₛₑₜ: Verzögerungssollwert
- aₜᵣₐᵢₙ: Verzögerungsistwert
- aₒᵤₜ: Verzögerungs-Stellgröße

- F: Bremskraft
- F_{axle 1}: Achsbremskraft
- F_{axle n}: Achsbremskraft

## Patentansprüche

1. Bremsregeleinrichtung (2) für ein Schienenfahrzeug, aufweisend einen Eingang (21) für einen Verzögerungssollwert (aₛₑₜ), einen Eingang (22) für einen Verzögerungsistwert (aₜᵣₐᵢₙ) sowie einen Ausgang (23) für einen Verzögerungs-Stellgrößenwert (aₒᵤₜ), wobei der Verzögerungs-Stellgrößenwert (aₒᵤₜ) durch eine Regeleinheit eingestellt wird, um eine Abweichung zwischen dem Verzögerungsistwert (aₜᵣₐᵢₙ) und dem Verzögerungssollwert (aₛₑₜ) zu minimieren, wobei eine Begrenzungsvorrichtung vorhanden ist, die den Verzögerungs-Stellgrößenwert (aₒᵤₜ) unabhängig von der Regeleinheit begrenzt, und wobei die Begrenzungsvorrichtung den Verzögerungs-Stellgrößenwert (aₒᵤₜ) derart begrenzt, dass er von dem Verzögerungssollwert (aₛₑₜ) höchstens um einen maximalen negativen Regelhub (14) zu kleineren Werten oder höchstens um einen maximalen positiven Regelhub (15) zu größeren Werten abweicht, **dadurch gekennzeichnet, dass** der negative maximale Regelhub (14) und/oder der positive maximale Regelhub (15) zeitabhängig sind.

2. Bremsregeleinrichtung (2) nach Anspruch 1, bei der zumindest einer der beiden maximalen Regelhübe (14, 15) nicht proportional zum Verzögerungssollwert (aₛₑₜ) ist.

3. Bremsregeleinrichtung (2) nach Anspruch 1 oder 2, bei der eine Summe aus dem maximalen negativen Regelhub (14) und dem maximalen positiven Regelhub (15) ein vorgegebener fester Wert ist.

4. Bremsregeleinrichtung (2) nach einem der Ansprüche 1 bis 3, bei der der maximale negative Regelhub (14) ungleich dem maximalen positiven Regelhub (15) ist.

5. Bremsregeleinrichtung (2) nach einem der Ansprüche 1 bis 4, bei der der negative maximale Regelhub (14) und/oder der positive maximale Regelhub (15) nach einer vorgegebenen Bremszeit abgesenkt werden.

6. Bremsregeleinrichtung (2) nach einem der Ansprüche 1 bis 5, bei der der positive maximale Regelhub (15) nur zeitabhängig ist, wenn der Verzögerungssollwert (aₛₑₜ) unterhalb eines vorgegebenen Grenzwerts liegt.

7. Bremsregeleinrichtung (2) nach einem der Ansprüche 1 bis 6, bei der der negative minimale Regelhub (14) nur zeitabhängig ist, wenn der Verzögerungssollwert (aₛₑₜ) oberhalb eines weiteren vorgegebenen Grenzwerts liegt.

8. Bremsregeleinrichtung (2) nach einem der Ansprüche 1 bis 7, bei der zumindest einer der beiden maximalen Regelhübe (14, 15) durch eine von dem Verzögerungssollwert (aₛₑₜ) und/oder der Bremszeit abhängigen Kennlinie oder einem Kennlinienfeld vorgegeben ist.

9. Bremsregeleinrichtung (2) nach einem der Ansprüche 1 bis 8, bei der zumindest einer der beiden maximalen Regelhübe (14, 15) abhängig von externen Einflussgrößen ist.

10. Bremsregeleinrichtung (2) nach Anspruch 9, bei der die externen Einflussgrößen Umgebungsbedingungen wie Temperatur oder Feuchtigkeit sind.

11. Bremsregeleinrichtung (2) nach Anspruch 9 oder 10, bei der die externen Einflussgrößen Fahrbedingungen des Schienenfahrzeugs sind, insbesondere eine Fahrgeschwindigkeit, ein Bremsdruck, eine Bremskraft und/oder eine Aktivierung eines Gleitschutzsystems und/oder eines Sandungssystems und/oder einer Magnetschienenbremse.

12. Bremsregeleinrichtung (2) nach einem der Ansprüche 1 bis 11, bei der die Begrenzungsvorrichtung mit der Regeleinheit gekoppelt ist, um auf Parameter der Regeleinheit abhängig von einer Begrenzung einzuwirken.

13. Betriebsverfahren für ein Bremssystem eines Schienenfahrzeug, bei dem ein Verzögerungs-Stellgrößenwert (aₒᵤₜ) abhängig von einem Verzögerungssollwert (aₛₑₜ) und einem Verzögerungsistwert (aₜᵣₐᵢₙ) durch eine Regeleinheit eingestellt wird, um eine Abweichung zwischen dem Verzögerungsistwert (aₜᵣₐᵢₙ) und dem Verzögerungssollwert (aₛₑₜ) zu minimieren, wobei der Verzögerungs-Stellgrößenwert (aₒᵤₜ) unabhängig von der Regeleinheit begrenzt wird, und wobei der Verzögerungs-Stellgrößenwert (aₒᵤₜ) derart begrenzt wird, dass er von dem Verzögerungssollwert (aₛₑₜ) höchstens um einen maximalen negativen Regelhub (14) zu kleineren Werten oder höchstens um einen maximalen positiven Regelhub (15) zu größeren Werten abweichen kann, **dadurch gekennzeichnet, dass** zumindest einer der beiden maximalen Regelhübe (14, 15) abhängig von der Bremszeit bestimmt wird.

14. Betriebsverfahren nach Anspruch 13, bei dem zumindest einer der beiden maximalen Regelhübe (14, 15) nicht proportional zum Verzögerungssollwert (aₛₑₜ) ist.

15. Betriebsverfahren nach Anspruch 13 oder 14, bei dem zumindest einer der beiden maximalen Regelhübe (14, 15) abhängig von dem Verzögerungssollwert (aₛₑₜ) und/oder Umgebungsbedingungen und/oder Fahrbedingungen bestimmt wird.

16. Bremssystem für ein Schienenfahrzeug, aufweisend eine Bremsregeleinrichtung (2) nach einem der Ansprüche 1 bis 12.

## Claims

1. Brake regulating device (2) for a rail vehicle, having an input (21) for a target deceleration value (aₛₑₜ), an input (22) for an actual deceleration value (aₜᵣₐᵢₙ), and an output (23) for a deceleration manipulated variable value (aₒᵤₜ), wherein the deceleration manipulated variable value (aₒᵤₜ) is set by a control unit in order to minimize a deviation between the actual deceleration value (aₜᵣₐᵢₙ) and the target deceleration value (aₛₑₜ), wherein a limiting device is present which limits the deceleration manipulated variable value (aₒᵤₜ) independently of the control unit, and wherein the limiting device limits the deceleration manipulated variable value (aₒᵤₜ) in such a way that it deviates from the target deceleration value (aₛₑₜ) at most by a maximum negative control excursion (14) toward lower values or at most by a maximum positive control excursion (15) toward higher values, **characterized in that** the negative maximum control excursion (14) and/or the positive maximum control excursion (15) are/is time-dependent.

2. Brake regulating device (2) as claimed in claim 1, in which at least one of the two maximum control excursions (14, 15) is not proportional to the target deceleration value (aₛₑₜ).

3. Brake regulating device (2) as claimed in claim 1 or 2, in which a sum of the maximum negative control excursion (14) and the maximum positive control excursion (15) is a predetermined fixed value.

4. Brake regulating device (2) as claimed in any of claims 1 to 3, in which the maximum negative control excursion (14) is not equal to the maximum positive control excursion (15).

5. Brake regulating device (2) as claimed in any of claims 1 to 4, in which the negative maximum control excursion (14) and/or the positive maximum control excursion (15) are/is lowered after a predetermined braking time.

6. Brake regulating device (2) as claimed in any of claims 1 to 5, in which the positive maximum control excursion (15) is time-dependent only if the target deceleration value (aₛₑₜ) is below a predetermined limit value.

7. Brake regulating device (2) as claimed in any of claims 1 to 6, in which the negative minimum control excursion (14) is time-dependent only if the target deceleration value (aₛₑₜ) is above a further predetermined limit value.

8. Brake regulating device (2) as claimed in any of claims 1 to 7, in which at least one of the two maximum control excursions (14, 15) is predetermined by a characteristic curve or a characteristic map which is dependent on the target deceleration value (aₛₑₜ) and/or the braking time.

9. Brake regulating device (2) as claimed in any of claims 1 to 8, in which at least one of the two maximum control excursions (14, 15) is dependent on external influencing variables.

10. Brake regulating device (2) as claimed in claim 9, in which the external influencing variables are environmental conditions such as temperature or humidity.

11. Brake regulating device (2) as claimed in claim 9 or 10, in which the external influencing variables are driving conditions of the rail vehicle, in particular a driving speed, a brake pressure, a braking force and/or an activation of a wheel slide protection system and/or of a sanding system and/or of a magnetic rail brake.

12. Brake regulating device (2) as claimed in any of claims 1 to 11, wherein the limiting device is coupled to the control unit so as to act on parameters of the control unit as a function of a limit.

13. Operating method for a brake system of a rail vehicle, in which a deceleration manipulated variable value (aₒᵤₜ) is set by a control unit as a function of a target deceleration value (aₛₑₜ) and an actual deceleration value (aₜᵣₐᵢₙ) in order to minimize a deviation between the actual deceleration value (aₜᵣₐᵢₙ) and the target deceleration value (aₛₑₜ), wherein the deceleration manipulated variable value (aₒᵤₜ) is limited independently of the control unit, **characterized in that** the deceleration manipulated variable value (aₒᵤₜ) is limited in such a way that it can deviate from the target deceleration value (aₛₑₜ) at most by a maximum negative control excursion (14) toward lower values or at most by a maximum positive control excursion (15) toward higher values, **characterized in that** the at least one of the two maximum control excursions (14, 15) is determined as a function of the braking time.

14. Operating method as claimed in claim 13, in which at least one of the two maximum control excursions (14, 15) is not proportional to the target deceleration value (aₛₑₜ).

15. Operating method as claimed in claim 13 or 14, in which at least one of the two maximum control excursions (14, 15) is determined as a function of the target deceleration value (aₛₑₜ) and/or environmental conditions and/or driving conditions.

16. Brake system for a rail vehicle, having a brake regulating device (2) as claimed in any of claims 1 to 12.

## Revendications

1. Dispositif de régulation de freinage (2) pour un véhicule ferroviaire, présentant une entrée (21) pour une valeur de consigne de ralentissement (aₛₑₜ), une entrée (22) pour une valeur réelle de ralentissement (aₜᵣₐᵢₙ) ainsi qu'une sortie (23) pour une grandeur de réglage de ralentissement (aₒᵤₜ), dans lequel la grandeur de réglage de ralentissement (aₒᵤₜ) est réglée par une unité de régulation pour minimiser un écart entre la valeur réelle de ralentissement (aₜᵣₐᵢₙ) et la valeur de consigne de ralentissement (aₛₑₜ), et dans lequel un dispositif de limitation est présent, qui limite la grandeur de réglage de ralentissement (aₒᵤₜ) indépendamment de l'unité de régulation, et dans lequel le dispositif de limitation limite la grandeur de réglage de ralentissement (aₒᵤₜ) de sorte qu'elle s'écarte de la valeur de consigne de ralentissement (aₛₑₜ) au maximum d'une course de régulation négative maximale (14) vers de plus petites valeurs ou au maximum d'une course de régulation positive maximale (15) vers de plus grandes valeurs **caractérisé en ce que** la course de régulation maximale négative (14) et/ou la course de régulation maximale positive (15) dépendent du temps.

2. Dispositif de régulation de freinage (2) selon la revendication 1, dans lequel au moins une des deux courses de régulation maximales (14, 15) n'est pas proportionnelle à la valeur de consigne de ralentissement (aₛₑₜ).

3. Dispositif de régulation de freinage (2) selon la revendication 1 ou 2, dans lequel une somme de la course de régulation négative maximale (14) et de la course de régulation positive maximale (15) est une valeur fixe prédéfinie.

4. Dispositif de régulation de freinage (2) selon l'une quelconque des revendications 1 à 3, dans lequel la course de régulation négative maximale (14) est différente de la course de régulation positive maximale (15).

5. Dispositif de régulation de freinage (2) selon l'une quelconque des revendications 1 à 4, dans lequel la course de régulation maximale négative (14) et/ou la course de régulation maximale positive (15) sont abaissées après un temps de freinage prédéfini.

6. Dispositif de régulation de freinage (2) selon la revendication 1 ou 5, dans lequel la course de régulation maximale positive (15) ne dépend du temps que si la valeur de consigne de ralentissement (aₛₑₜ) se situe sous une valeur limite prédéfinie.

7. Dispositif de régulation de freinage (2) selon l'une quelconque des revendications 1 à 6, dans lequel la course de régulation minimale négative (14) ne dépend du temps que si la valeur de consigne de ralentissement (aₛₑₜ) se situe au-dessus d'une valeur limite prédéfinie supplémentaire.

8. Dispositif de régulation de freinage (2) selon l'une quelconque des revendications 1 à 7, dans lequel au moins une des deux courses de régulation maximales (14, 15) est prédéfinie par une courbe ou un champ de courbes caractéristiques dépendant de la valeur de consigne de ralentissement (aₛₑₜ) et/ou du temps de freinage.

9. Dispositif de régulation de freinage (2) selon l'une quelconque des revendications 1 à 8, dans lequel au moins une des deux courses de régulation maximales (14, 15) dépend de grandeurs d'influence externes.

10. Dispositif de régulation de freinage (2) selon la revendication 9, dans lequel les grandeurs d'influence externes sont des conditions ambiantes telles que la température ou l'humidité.

11. Dispositif de régulation de freinage (2) selon la revendication 9 ou 10, dans lequel les grandeurs d'influence externes sont des conditions de conduite du véhicule ferroviaire, en particulier une vitesse de conduite, une pression de freinage, une force de freinage et/ou une activation d'un système antidérapage et/ou d'un système de sablage et/ou d'un frein magnétique sur rail.

12. Dispositif de régulation de freinage (2) selon l'une quelconque des revendications 1 à 11, dans lequel le dispositif de limitation est couplé à l'unité de régulation pour agir sur des paramètres de l'unité de régulation en fonction d'une limitation.

13. Procédé de fonctionnement d'un système de freinage d'un véhicule ferroviaire, dans lequel une grandeur de réglage de ralentissement (aₒᵤₜ) est réglée par une unité de régulation en fonction d'une valeur de consigne de ralentissement (aₛₑₜ) et d'une valeur de consigne de ralentissement (aₜᵣₐᵢₙ) pour minimiser un écart entre la valeur réelle de ralentissement (aₜᵣₐᵢₙ) et la valeur de consigne de ralentissement (aₛₑₜ), dans lequel la grandeur de réglage de ralentissement (aₒᵤₜ) est limitée indépendamment de l'unité de régulation, **caractérisé en ce que** la grandeur de réglage de ralentissement (aₒᵤₜ) est limitée de sorte qu'elle peut s'écarter de la valeur de consigne de ralentissement (aₛₑₜ) au maximum d'une course de régulation négative maximale (14) vers de plus petites valeurs ou au maximum d'une course de régulation positive maximale (15) vers de plus grandes valeurs, **caractérisé en ce que** l'au moins une parmi les deux courses de régulation maximale (14, 15) est déterminée comme une fonction de temps de freinage.

14. Procédé de fonctionnement selon la revendication 13, dans lequel au moins une des deux courses de régulation maximales (14, 15) n'est pas proportionnelle à la valeur de consigne de ralentissement (aₛₑₜ).

15. Procédé de fonctionnement selon la revendication 13 ou 14, dans lequel au moins une des deux courses de régulation maximales (14, 15) est déterminée en fonction de la valeur de consigne de ralentissement (aₛₑₜ) et/ou des conditions ambiantes et/ou des conditions de conduite.

16. Système de freinage pour un véhicule ferroviaire, présentant un dispositif de régulation de freinage (2) selon l'une quelconque des revendications 1 à 12.
